# EUROPEAN PATENT SPECIFICATION

(11) **EP 3 135 570 B1**
(45) Date of publication and mention of the grant of the patent: **26.06.2019**
(21) Application number: 16185428.6
(22) Date of filing: 24.08.2016
(51) Int. Cl.: B62J 9/00, B62J 11/00

(54) **DEVICE FOR HOOKING A BAG TO A FIXED REAR STRUCTURE OF A MOTORCYCLE**
VORRICHTUNG ZUR BEFESTIGUNG EINER TASCHE AUF EINER FESTEN HINTEREN STRUKTUR EINES MOTORRADS
DISPOSITIF POUR L'ACCROCHAGE D'UNE SACOCHE À UNE STRUCTURE ARRIÈRE FIXE D'UNE MOTOCYCLETTE

(30) Priority: 28.08.2015 IT UB20153282
(43) Date of publication of application: 01.03.2017
(73) Proprietor: Mei, Jacopo, 50061 Fiesole (FI) (IT)
(72) Inventor: MEI, Jacopo, 50061 Fiesole (FI) (IT)
(74) Representative: Brazzini, Silvia

(56) References cited:
- JP-U- S5 048 351
- JP-U- S5 619 479

## Description

### Field of the invention

The present invention refers to the field of motorcycle accessories, and more in particular it relates to a device for hooking a bag to a fixed rear structure of a motorcycle, in a safe and easy way.

### State of the art

On motorcycles the use of bags, and more in general of top boxes, is widespread, in particular the use of more or less rigid bags engaged in the rear part of the vehicle, directly at the motorcycle frame structure, or to a suitable structure fixed firmly to the motorcycle; one or more coupling means are also applied to the bags, so as to create a complete attaching system together with complementary means provided on said frame.

The coupling systems known to date have particularly focused on achieving a secure and stable attachment of the bag on the motorcycle, which guarantee the necessary stability even during movement of the vehicle, preventing accidental release of the bag that could also cause falls and accidents. To do this, the devices in use up to now were equipped in general with a little flexible coupling system, often only suitable to a type of motorcycle and a bag forming part of a kit, and in addition their assembly and disassembly is anything but simple and fast, sometimes also providing tools dedicated to it. Not to mention also that the aesthetics of the bag and also of the motorcycle as a whole, once there is a system of this kind hooked to it, is overlooked entirely for the benefit of security. In this regard, it should be noted that the bags to be hooked to motorcycles generally in use up to now are rigid trunks, bulky, that can restrict the movement of a possible passenger, and because of their shape and size they cannot be used for other uses, in particular when dropped once stopped the vehicle and brought as any other kind of bags; they are, in fact, intended in general for use exclusively on the motorcycle.

More recently side frames for motorcycles were put on the market too, to be fixed on the rear structure, they have more or less long tubular portions, to which even a soft bag may be anchored by means of straps. The stability and safety of such solution is obviously poor, and the frames proposed are of different shape and size depending on the model of motorcycle onto which they must be coupled.

The publications JP S56 19479 U, on which the preamble of independent claim 1 is based, and JP S50 48351 U refer to devices for hooking bags on motorcycles.

If on one side the requirements of safety that have until today directed the design of such articles are entirely understandable and indeed rightful, on the other side the use of such known systems does not accord with the spirit of freedom, speed and simplicity that has always been linked to the use of motorcycle. Moreover, especially for the users of particular models of motorcycles, the aesthetic appearance is not at all negligible, and it weighs on the choices of an accessory rather than of another, as much as the security needs.

### Summary of the invention

In light of the reasons explained above, a subject of the present invention is therefore to provide a device for hooking a bag to a fixed rear structure of a motorcycle, which is able of facilitating the hooking and unhooking operations, while maintaining high security and stability of the system during the movement of the vehicle, moreover without compromising the aesthetics of the latter.

A further subject of the present invention is to provide a device for hooking a bag to a fixed rear structure of a motorcycle, that is suitable for each type and model of motorcycle, regardless of the size and the shape of its chassis, without having to use in no case further accessories or adapters.

Still a further subject of the present invention is to provide a device for hooking a bag to a fixed rear structure of a motorcycle, which does not compromise the aesthetic appearance of the vehicle and do not limit its use due to the presence of rigid and bulky bags that may prevent for instance the transport of a passenger and the use of the bags outside of the its use on the motorcycle.

Still a further subject of a preferred embodiment of the present invention is to provide a kit for hooking a bag to a fixed rear structure of a motorcycle, comprising a bag and a device for hooking it to a fixed rear structure of a motorcycle, which is provided with the advantageous technical characteristics listed above.

Still a further subject of the present invention is to provide a method for hooking a bag to a fixed rear structure of a motorcycle, by means of the use of a device for hooking a bag to a fixed rear structure of a motorcycle, provided with the above said advantageous technical characteristics. In accordance with the present invention there is provided a device for hooking a bag to a fixed rear structure of a motorcycle and a method for hooking a bag to a fixed rear structure of a motorcycle as set out in independent claims 1 and 8, respectively. Preferred embodiments of the present invention are laid down in the appended dependent claims.

### Brief description of the figures

The features and advantages of a device for hooking a bag to a fixed rear structure of a motorcycle, and of a related kit comprising this device and a bag, will be more clearly explained in the following detailed description of embodiments thereof, given for exemplary and non-limitative purposes, further with reference to the schematic figures here attached, wherein:
- Figure 1 shows a perspective view of an embodiment of the device for hooking a bag to a fixed rear structure of a motorcycle, according to the invention;
- Figure 2 is an exploded view of the device of Figure 1;
- Figures 3a, 3b and 3c show the kit comprising the device for hooking a bag to a fixed rear structure of a motorcycle, according to the invention in a particular embodiment thereof wherein the components of the kit are illustrated in three different positions so as to show their interaction;
- Figure 4 show the kit comprising the device for hooking a bag to a fixed rear structure of a motorcycle, according to the invention substantially in the configuration of Figure 3c as mounted on a motorcycle.

### Detailed description of the invention

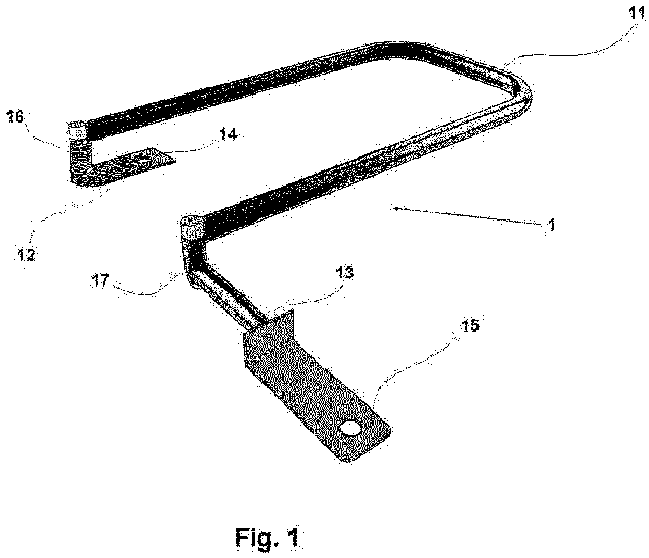

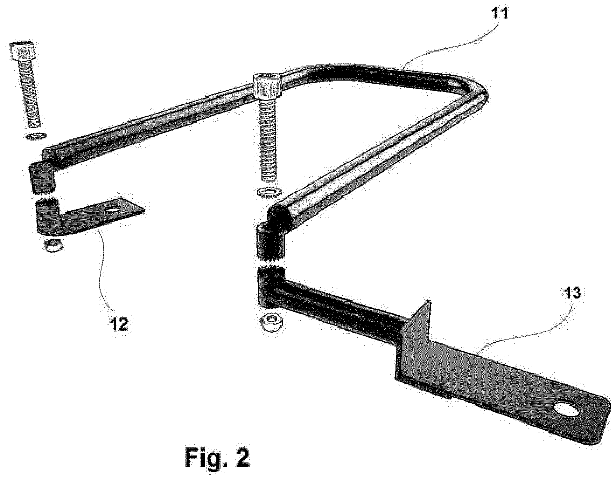

With reference to the above said figures, and in particular to Figures 1 and 2, it is illustrated a device 1 for hooking a bag or a container to a motorcycle, consisting of a rigid, U-shaped tubular body 11, at each end of this tubular body are connected hooking means 12,13; each hooking means comprises a plate-like body 14,15 intended for hooking to the rear structure of a motorcycle and connected to the end of the tubular body 11 by means of a joint 16,17 so that said plate-like body 14,15 can freely rotate with respect to the tubular body 11 on a plane substantially parallel with respect to the plane on which the tubular body lies. According to a preferred embodiment of the present invention, also illustrated in the attached figures, the plate-like body 14,15 is provided with a hole for the attachment to the frame structure of a motorcycle by means of bolt. The freedom of orientation of the plate-like body 14,15 with respect to the tubular body 11 is such that the device can be adapted for use on any kind of rear structure, and in particular it can be used to engage the body 14 to the portion of structure over the shock absorber and the body 15 to the portion of structure at the motorcycle footrest, so as to position the U-shaped, tubular body 11 in horizontal position in the rear part of the motorcycle, alongside the rear wheel. The joints 16,17, of equal or different length from each other, have preferably such a configuration as to position the tubular body 11 and the two plate-like bodies 14,15 on substantially parallel planes, spaced between each other for instance of about 2-4 cm so as to leave space to the cover of the pocket of the bag 2 once mounted on the device.

The present device 1 can be made in a single piece with the plate-like bodies 14,15 anyway orientable with respect to the tubular body 11 or, preferably, it may consist of at least three separate parts, U-shaped tubular body and two plate-like bodies with related joints, to be connected when the device is mounted on the motorcycle by means of bolts and self-locking nuts for a secure tightening of the parts. In this latter case, for an even safer lock, the joints 16,17 are connected to the ends of the U-shaped tubular body 11 by engagement of the male-female type with a self-locking nut. With reference in particular to the figure 2 attached, according to a preferred embodiment of the invention, capable of guaranteeing an even greater stability of the present device in use, even after a prolonged use on a motorcycle subjected to continuous vibrations and to the weight of the bag's content, the joints 16,17 consist of separate portions each provided with a toothed head, suitable for being mutually connected so as to obtain an anti-unscrewing connections.

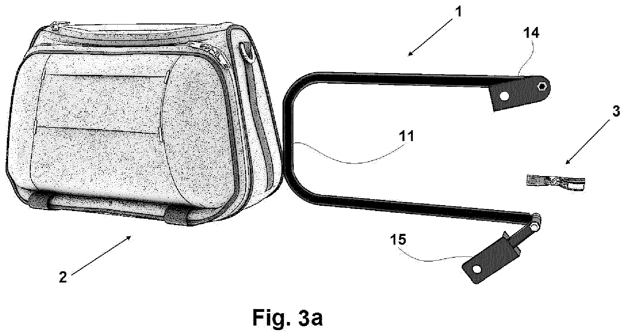

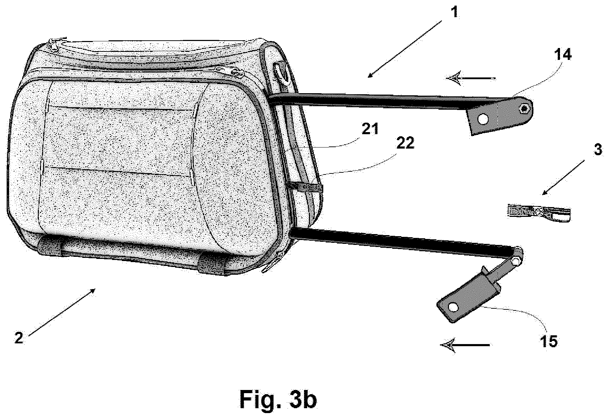

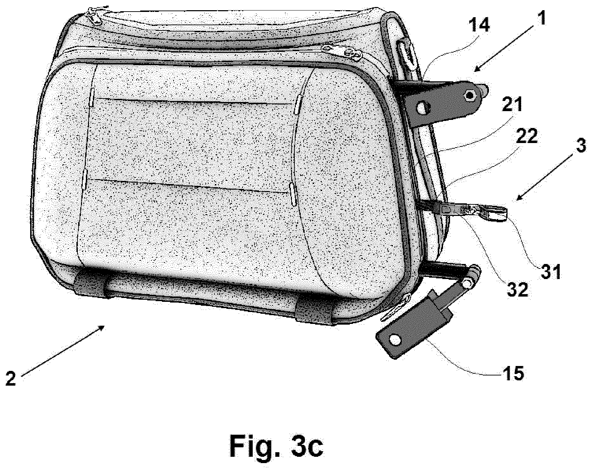

With particular reference to figures 3a, 3b and 3c, it is showed a kit comprising a device 1 for hooking a bag to a motorcycle and a bag 2 by means of insertion of a portion of the device inside an inner pocket in the bag. Always with particular reference to figures from 3a to 3c, according to a preferred embodiment of the invention, the kit further comprises hooking means 3 of the bag 2 to the motorcycle's structure as further coupling of the bag to the motorcycle, so as to increase the stability of the bag when the motorcycle is moving and to guarantee a greater safety in case of unwanted extraction of the bag 2 from the device 1. The bag 2 comprised in the present kit is provided with a side opening 21 for the insertion in the tubular body 11 in an inner pocket of the bag having suitable size and shape, preferably a pocket extending for at least half the length of the bag. In a preferred embodiment the side opening 21 is provided with closure means, for instance a zip closure, for closing the bag when it is used as a personal accessory, separately from its use on the motorcycle. The hooking means 3 of the bag to the motorcycle structure may be of any shape suitable for performing the hooking function, it can be for instance provided with a loop 31 as illustrated in Figure 3c suitable for insertion of a portion of the structure and, on the opposite side, of a snap hook or of any other means for hooking to a string on the bag 2; according to a preferred embodiment of the present kit the hooking means 3 is intended for hooking, by means of a portion thereof 32 on the opposite side with respect to the loop 31, an anchoring means 22 fastened inside the pocket of the bag, for instance with a male-female type coupling means.

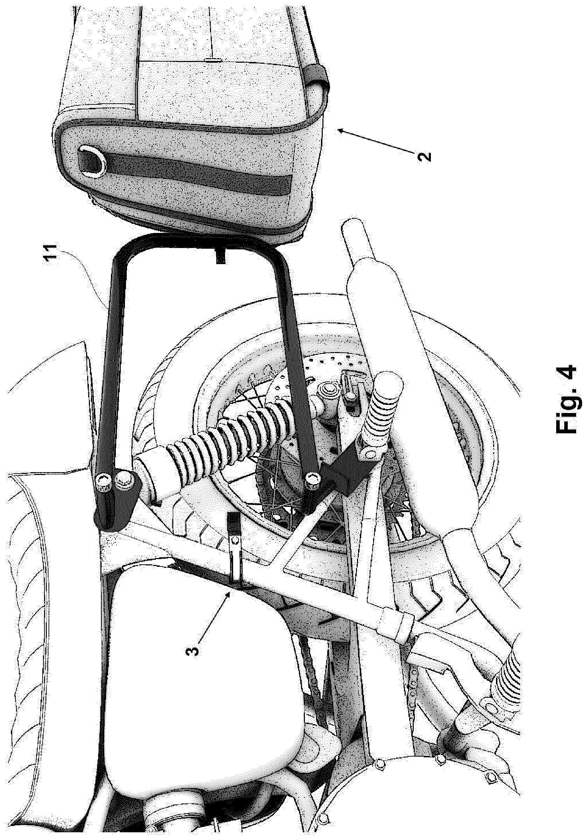

In figure 4 is showed how the present device is hooked to the rear structure of a motorcycle according to a method of the invention.

The bag 2 of the present kit was represented in the attached figures as a bag of substantially parallelepiped shape, with pockets and zip closures, but it is understood that any shape, material, size and structure of the bag is comprised within the scope of the invention as long as the bag is provided with the lateral opening 21 for accessing a special internal pocket described above in detail and intended to accommodate the tubular body 11 of the device, preferably equipped with anchoring means 22 fastened inside the pocket.

In particular, as a part of the present kit, non-rigid bags can be used too, that are made with leather or textiles with a soft profile, having a more contemporary aspect with respect to the boxes for motorcycles currently on the market. Materials suitable for the manufacture of the present device 1 are in general metal materials used in the field of mechanical constructions, among these in particular the steel, which may be chromed or brushed of several colours.

Thanks to its particular structure, the present device is suitable for motorcycles having the most different chassis, in particular for the motorcycles Triumph Gamma Boneville Truxston, Scrambler and similar; Royale, Moto Guzzi, Honda cb 400, 500 and 750, Kawasaki, W800, Bmwr80, and so on. The present kit may furthermore comprise plate-like bodies (14,15) of different lengths, among which the most appropriate length can be chosen for mounting the device of the invention on a certain type of motorcycle.

In using the device of the present invention, in particular thanks to the rigidity of the U-shaped tubular body and the presence of the anchor means, it was moreover noted that an excellent result may be obtained in the stability of the bag during the movement of the vehicle, without having to employ special tools and very long times for assembly and disassembly. The simplicity and rapidity of the operations required is much more superior compared to the conditions of use of the kits currently available on the market.

The present invention therefore allows to overcome the problems of providing a device for hooking a bag to a fixed rear structure of a motorcycle, that guarantees the due hooking security and stability of the bag, which is suitable for any structures of different motorcycles without having to use adapters and special accessories, which can be easily assembled and at the same time can be easily removed to carry the bag after parking the motorcycle, thus using the bag as a personal accessory, independently from its transport on the motorcycle.

The present device is also easy to interface with the parts to be connected with, is able to adapt to any type of structures without creating too much encumbrance or weigh down the part of the motorcycle where it is applied; accordingly, positive effects result both in terms of aesthetics and in terms of comfort for a possible passenger to freely move.

The present invention has been described up to here with reference to preferred embodiments thereof. It should be understood that there may be other embodiments which are covered by the scope of the invention as defined by the appended claims.

## Claims

1. A device (1) for hooking a bag (2) to a fixed rear structure of a motorcycle, comprising a rigid, U-shaped, tubular body (11) intended to be inserted in a special pocket of a bag (2) and provided at each end with anchoring means (12,13), said device being **characterised in that** said anchoring means (12,13) end with a plate-like body (14,15) intended to be constrained to a fixed rear structure of a motorcycle, each plate-like body (14,15) is joined to an end of said tubular body (11) by means of a joint (16,17) so that said plate-like body (14,15) may freely rotate on a plane substantially parallel to the plane on which said tubular body (11) lies.

2. The device according to claim 1, wherein said joints (16,17) have such a configuration that said tubular body (11) and, respectively, said plate-like bodies (14,15) are on planes substantially parallel between each other and spaced 2-4 cm.

3. The device according to any one of the preceding claims, wherein said plate-like bodies (14,15) are each provided with a hole for the constrain to a fixed rear structure of a motorcycle by means of bolts and self-locking nuts.

4. A kit for hooking a bag (2) to a fixed rear structure of a motorcycle, comprising the device (1) as defined in claims 1-3, a bag (2) provided with a side opening (21) for inserting said tubular body (11) in an inner pocket of said bag (2), and hooking means (3) of said bag (2) to a fixed rear structure of a motorcycle.

5. The kit according to claim 4, wherein said hooking means (3) comprise a loop (31) adapted to anchor to a part of a fixed rear structure of a motorcycle and, on the opposite side, a portion (32) intended for engaging in a portion of said bag (2).

6. The kit according to any one of the claims 4 or 5, wherein said bag (2) is provided with fastening means (22), fastened inside said pocket of the bag (2) and intended for forming a male-female coupling system with a portion (32) of said hooking means (3).

7. A kit according to any one of the claims 4-6, wherein said side opening (21) is provided with a closure for the use of said bag (2) as a personal accessory, independently from its carrying on a fixed rear structure of a motorcycle.

8. A method for hooking a bag (2) to a fixed rear structure of a motorcycle,
comprising mounting on said fixed rear structure of the motorcycle a device (1) as defined in claims from 1 to 3, by engaging said plate-like bodies (14, 15) respectively to the portion of said fixed rear structure over the shock absorber and to the portion of the fixed rear structure at the motorcycle footrest, so as to position said tubular body (11) in horizontal position in the rear part of the motorcycle for its insertion in a special pocket of said bag (2).

## Patentansprüche

1. Vorrichtung (1) zum Einhängen einer Tasche (2) an einer festen Struktur eines Motorrades, wobei ein starrer, U-förmiger rohrartiger Körper (11) enthalten ist, der vorgesehen ist, um in einer speziellen Aussparung einer Tasche (2) eingesetzt zu werden, und an jedem Ende mit Ankereinrichtungen (12, 13) versehen ist, wobei die Vorrichtrung **dadurch gekennzeichnet ist, dass** die Ankereinrichtungen (12, 13) in einem plattenähnlichen Körper (14, 15) enden, der vorgesehen ist, um an einer Struktur eines Motorrades festgezwängt zu werden, wobei jeder plattenähnliche Körper (14, 15) mit einem Ende des rohrartigen Körpers (11) mittels einer Verbindung (16, 17) verbunden ist, so dass der plattenähnliche Körper (14, 15) in einer Ebene im Wesentlichen parallel zu der Ebene frei rotieren kann, in der der rohrartige Körper (11) liegt.

2. Vorrichtung nach Anspruch 1, wobei die Verbindungen (16, 17) eine solche Konfiguration haben, dass der rohrartige Körper (11) und entsprechend die plattenähnlichen Körper (14, 15) in Ebenen sind, die untereinander im Wesentlichen parallel und 2 - 4 cm beabstandet sind.

3. Vorrichtung nach einem der vorhergehenden Ansprüche, wobei die plattenähnlichen Körper (14, 15) jeweils mit einem Loch für das Festzwängen an einer festen hinteren Struktur eines Motorrades mittels Bolzen oder selbstsperrenden Schrauben versehen sind.

4. Bausatz zum Einhängen einer Tasche (2) an einer festen Struktur eines Motorrades, wobei eine Vorrichtung (1), wie sie in den Ansprüchen 1 - 3 definiert ist, eine Tasche (2), die mit einer Seitenöffnung (21) zum Einsetzen des rohrartigen Körpers (11) in einer inneren Aussparung der Tasche (2) versehen ist, und Einhängeinrichtungen (3) der Tasche (2) an einer festen hinteren Struktur eines Motorrades enthalten sind.

5. Bausatz nach Anspruch 4, wobei die Einhängeinrichtungen (3) eine Schleife (31), die ausgelegt ist, um an einem Teil einer hinteren Struktur eines Motorrades verankert zu werden, und auf der entgegengesetzten Seite ein Teil (32) enthalten, das vorgesehen ist, um in einen Teil der Tasche (2) einzugreifen.

6. Bausatz nach einem der Ansprüche 4 oder 5, wobei die Tasche (2) mit Befestigungseinrichtungen (22) versehen ist, die innerhalb der Aussparung der Tasche (2) befestigt und vorgesehen sind, um ein Männlich-Weiblich-Kopplungssystem mit einem Teil (32) der Einhängeinrichtungen (3) zu bilden.

7. Bausatz nach einem der Ansprüche 4 - 6, wobei die Seitenöffnung (21) mit einem Verschluss für die Verwendung der Tasche (2) als ein persönliches Accessoire unabhängig von seinem Getragenwerden an einer festen hinteren Struktur eines Motorrades versehen ist.

8. Verfahren zum Einhängen einer Tasche (2) an einer festen hinteren Struktur eines Motorrades, wobei enthalten ist das Anbringen einer Vorrichtung (1), wie sie in den Ansprüchen 1 - 3 definiert ist an der festen hinteren Struktur eines Motorrades durch In-Eingriff-Bringen der plattenähnlichen Körper (14, 15) jeweils an dem Teil der festen hinteren Struktur über den Stoßdämpfern und an dem Teil der festen hinteren Struktur an der Motorrad-Fußstütze, um den rohrartigen Körper (11) für sein Einsetzen in eine spezielle Aussparung der Tasche (2) in einer horizontalen Position am hinteren Teil des Motorrades zu positionieren.

## Revendications

1. Un dispositif (1) pour accrocher une sacoche (2) à une structure arrière fixe d'une motocyclette, comprenant un corps tubulaire rigide en forme de U (11) destiné à être inséré dans une poche spéciale d'une sacoche (2), et muni à chaque extrémité de moyens d'ancrage (12,13), ledit dispositif étant **caractérisé en ce que** lesdits moyens d'ancrage (12, 13) se terminent par un corps en forme de plaque (14,15) destiné à être accroché à une structure arrière fixe d'une motocyclette, chaque corps en forme de plaque (14, 15) étant relié à une extrémité dudit corps tubulaire (11) par des moyens de raccord (16, 17) de façon que ledit corps en forme de plaque (14, 15) puisse pivoter librement dans un plan sensiblement parallèle au plan dans lequel se situe ledit corps tubulaire en forme de U (11).

2. Le dispositif selon la revendication 1, dans lequel lesdits raccords (16, 17) ont une configuration telle que ledit corps tubulaire (11) et, respectivement, lesdits corps en forme de plaque (14, 15), sont dans des plans sensiblement parallèles entre eux et espacés de 2-4 cm.

3. Le dispositif selon l'une quelconque des revendications précédentes, dans lequel lesdits corps en forme de plaque (14, 15) sont chacun munis d'un orifice pour les accrocher à une structure arrière fixe d'une motocyclette par des moyens de boulons et d'écrous autobloquants.

4. Un kit pour accrocher une sacoche (2) à une structure arrière fixe d'une motocyclette, comprenant le dispositif (1) tel que défini dans les revendications 1-3, une sacoche (2) munie d'une ouverture latérale (21) pour insérer ledit corps tubulaire (11) dans une poche intérieure de ladite sacoche (2), et des moyens d'accrochage (3) de ladite sacoche (2) à ladite structure arrière fixe d'une motocyclette.

5. Le kit selon la revendication 4, dans lequel lesdits moyens d'accrochage (3) comprennent une boucle (31) adaptée pour s'ancrer à une partie de ladite structure arrière fixe d'une motocyclette et, du côté opposé, une portion (32) destinée à s'engager dans une portion de ladite sacoche (2).

6. Le kit selon l'une quelconque des revendications 4 et 5, dans lequel ladite sacoche (2) est pourvue de moyens de fixation (22), fixés à l'intérieur de ladite poche de la sacoche (2) et destinés à former un système de couplage mâle-femelle avec une portion (32) desdits moyens d'accrochage (3).

7. Le kit selon l'une quelconque des revendications 4 à 6, dans lequel ladite ouverture latérale (21) est munie d'une fermeture permettant l'utilisation de ladite sacoche (2) comme accessoire personnel, indépendamment de son transport lorsqu'elle est accrochée à une structure arrière fixe d'une motocyclette.

8. Un procédé pour accrocher une sacoche (2) à une structure arrière fixe d'une motocyclette comprenant le montage, sur ladite structure, d'un dispositif (1) tel que défini dans les revendications 1 à 3, en engageant lesdits corps en forme de plaque (14,15) respectivement dans la partie de ladite structure arrière fixe située au-dessus de l'amortisseur et dans le partie de la structure arrière fixe au niveau du repose-pied de la motocyclette, de manière à positionner ledit corps tubulaire en forme de U (11) en position horizontale dans la partie arrière de la motocyclette pour son insertion dans une poche spéciale de ladite sacoche (2).
